(19) Europäisches Patentamt
European Patent Office
Office européen des brevets

(11) **EP 2 217 985 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(21) Anmeldenummer: **08857393.6**

(22) Anmeldetag: **03.12.2008**

(51) Int Cl.:
**G05D 23/12** *(2006.01)*   **G05D 23/19** *(2006.01)*

(86) Internationale Anmeldenummer:
**PCT/DK2008/000427**

(87) Internationale Veröffentlichungsnummer:
**WO 2009/071084 (11.06.2009 Gazette 2009/24)**

(54) **THERMOSTATVENTILAKTUATOR**

THERMOSTATIC VALVE ACTUATOR

ACTIONNEUR DE VANNE THERMOSTATIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.12.2007 DE 102007058496**

(43) Veröffentlichungstag der Anmeldung:
**18.08.2010 Patentblatt 2010/33**

(73) Patentinhaber: **Danfoss A/S**
**6430 Nordborg (DK)**

(72) Erfinder: **MOLBAEK, Jens, Jørgen**
**6430 Nordborg (DK)**

(56) Entgegenhaltungen:
EP-A- 0 923 013       DE-A1- 3 545 232
DE-B3-102006 006 999   US-A1- 2004 182 944

• JÄTH & B MARTIN M: "fernverstellbares thermostatventil zentralgesteuert" ZEITSCHRIFT FUR HEIZUNG, LUFTUNG, KLIMATECHNIK,HAUSTECHNIK, VDI VERLAG. DUSSELDORF, DE, Bd. 38, Nr. 1, 1. Januar 1987 (1987-01-01), Seiten 7-10, XP002140302

**Beschreibung**

Die Erfindung betrifft einen Thermostatventilaktuator für eine Anlage, insbesondere einen Thermostatventilaktuator für Warmwasserheizungsanlagen, speziell einen Thermostatventilaktuator für Brauchwassererwärmungsvorrichtungen, der ein Steuerelement, welches sich temperaturabhängig verändert, ein Betätigungselement, welches die Veränderung des Steuerelements zur Regelung der Anlage nutzt, sowie wenigstens eine Beeinflussungsvorrichtung, welche die Regelungscharakteristik des Steuerelements beeinflusst, aufweist.

Thermostatventilaktuatoren, wie beispielsweise Thermostatventilaufsätze dienen dazu, in einem Raum eine vorgegebene Solltemperatur mit Hilfe eines Heizkörpers oder einer Heizfläche zu erzielen. Bei derartigen Thermostatventilaufsätzen wird die Temperatur des Raums, in dem sich der Heizkörper befindet, mittels eines Steuerelements erfasst. Das Steuerelement verändert sich temperaturabhängig. Diese temperaturabhängige Veränderung des Steuerelements wird in eine mechanische Bewegung eines Betätigungselements umgesetzt, das wiederum den Stößel eines Heizkörperventils betätigt. Üblicherweise wird das Heizkörperventil umso stärker gedrosselt, je weiter der Stößel des Heizkörperventils gegen die Kraft einer Ventilfeder eingeschoben ist. Die derzeit gebräuchlichste Bauform von Thermostatventilaufsätzen besteht darin, dass ein Steuerelement verwendet wird, das mit einer Füllung gefüllt ist, deren Volumen sich mit der Temperatur ändert. Diese Volumenänderung wird in eine mechanische Bewegung des Betätigungselements umgesetzt.

Thermostatventilaufsätze dieser Art sind seit langem eingeführt und arbeiten zufriedenstellend. Mit steigenden Energiepreisen, steigendem Umweltbewusstsein und steigenden Komfortansprüchen hat es sich in den letzten Jahren als erforderlich erwiesen, dass der Wirkzusammenhang zwischen dem Thermostatelement und dem Betätigungselement geändert werden kann, beispielsweise um den vorgegebenen Temperatursollwert im Rahmen einer Nachtabsenkung auf einen niedrigeren Wert abzusenken. In vielen Fällen reicht es aus, wenn der Sollwert der Raumtemperatur nachts um beispielsweise 4 °C abgesenkt wird, weil ein gut isoliertes Haus nachts nur etwa 2 bis 3 °C Temperatur verliert.

Derartige Thermostatventilaufsätze sind beispielsweise aus EP 1 033 638 A1 bekannt. Dort ist ein Thermostatventilaufsatz beschrieben, der eine Verstelleinrichtung aufweist, die den Wirkzusammenhang zwischen Thermostatelement und Betätigungselement verändert. Dabei wirkt ein Elektromotor über ein Zahnradgetriebe auf eine Spindel ein. Die Spindel verändert die Länge eines Betätigungselements, das zwischen dem temperaturveränderlichen Steuerelement und dem Stößel des Heizkörperventils angeordnet ist.

In DE 31 53 654 C2 ist ein weiterer Thermostatventilaufsatz beschrieben. Hier ist zwischen dem Stößel des Thermostataufsatzes und dem Stößel des Heizkörperventils ein längenveränderliches Zwischenstück eingesetzt, das durch eine ovale Scheibe gebildet ist. Die ovale Scheibe hat in einer Ausrichtung einen größeren Durchmesser als in der um 90° dazu verdrehten Ausrichtung. Die Scheibe ist schwimmend auf einem Drehkreuz gelagert, das seinerseits über ein Getriebe von einem Elektromotor angetrieben ist. Auch hier wird die Länge des effektiven Betätigungselements, welches die Kraft zwischen dem Steuerelement und dem Betätigungsstift des Heizkörperventils vermittelt, unmittelbar verändert.

In DE 38 21 813 C1 ist ein weiterer Thermostatventilaufsatz beschrieben. Bei diesem Thermostatventilaufsatz ist das Steuerelement als ein Hohlraum ausgebildet, der mit einer Flüssigkeit gefüllt ist, deren Volumen sich in Abhängigkeit von der Umgebungstemperatur verändert. Aufgrund der Volumenänderung wird ein mittels eines Balgelements mit dem Hohlkörper gekoppeltes Betätigungselement bewegt. Um die Regelungscharakteristik des Steuerelements zu beeinflussen ist eine Kolben-Zylinderanordnung vorgesehen, die fluidisch mit dem flüssigkeitsgefüllten Hohlraum in Verbindung steht. Über eine Verschiebung des Kolbens im Zylinder kann das effektive Volumen des Hohlraums vergrößert oder verkleinert werden. Weitere beeinflussbaren Thermostatventilaktuatoren sind aus DE 10 2006 006999 B3, EP 0923013 A1 und US2004/0182944 A1 bekannt.

Thermostatventilaktuatoren werden heutzutage jedoch nicht nur in Form von Thermostatventilaufsätzen für Raumheizkörper verwendet, sondern vielmehr auch an unterschiedlichen Stellen von Heizanlagen eingesetzt. Beispielsweise finden Thermostatventilaktuatoren auch im Zusammenhang mit Wärmetauschern Verwendung, in denen Wärme von einem Heizungskreislauf auf einen Brauchwasserkreislauf übertragen wird. Der Heizungskreislauf kann in Form einer häuslichen Heizungsanlage vorliegen oder es kann sich um einen Fernwärmeanschluss handeln. Der Heizungskreislauf erhitzt über den Wärmetauscher Brauchwasser, beispielsweise die Heißwasserleitung in einer Wohnung oder die Heißwasserzuleitung für eine Fußbodenheizung.

Speziell Thermostatventilaktuatoren für die Erhitzung von Warmwasserleitungen weisen sehr anspruchsvolle Anforderungen auf, die es zu erfüllen gilt. Beispielsweise sollen derartige Thermostatventilaktuatoren möglichst unabhängig von einer benötigten Ventilkraft ein Ventil ansteuern können. Auch ist es erforderlich, dass diese das von ihnen gesteuerte Ventil nach einer Temperaturänderung möglichst rasch nachsteuern. Selbstverständlich sollen derartige Thermostatventilaktuatoren auch möglichst preisgünstig sein.

Derzeit im Stand der Technik bekannte Thermostatventilaktuatoren weisen nach wie vor gewisse Defizite auf.

Die Aufgabe der Erfindung besteht daher darin, einen möglichst universell einsetzbaren, beeinflussbaren Thermostatventilaktuator vorzuschlagen.

Zur Lösung der Aufgabe wird vorgeschlagen, einen eingangs erwähnten Thermostatventilaktuator dahingehend weiterzubilden, dass dessen Beeinflussungsvorrichtung die Regelungscharakteristik des Steuerelements mittels einer elastischen Koppelvorrichtung beeinflusst.

Durch diese elastische Koppelung kann der Thermostatventilaktuator mit einer gewissen, auf die jeweilige Situation angepassten "Vorspannung" versehen werden. Durch diese "Vorspannung" kann das Betätigungselement, welches in der Regel auf den Ventilstift eines Ventils einwirkt so eingestellt werden, dass die Kraft, die das Steuerelement ausüben kann, gemeinsam mit der "Vorspannung" durch die elastische Koppelvorrichtung, einen im Wesentlichen beliebigen Ventilstößeldruck überwinden kann. Auf diese Weise kann der vorgeschlagene Thermostatventilaktuator im Zusammenhang mit unterschiedlichsten Ventilen verwendet werden. Darüber hinaus ist es durch die elastische Koppelung möglich, dass mittels des Steuerelements ein sehr schneller anfänglicher Schaltvorgang erfolgen kann, auch wenn dieser gegebenenfalls nicht die volle gewünschte Schalthöhe aufweist. Eine anschließende Nachführung des Steuerelements beispielsweise mit Hilfe eines Elektromotors über die elastische Koppelvorrichtung kann an den anfänglichen Schaltvorgang anschließen. Auf diese Weise ist es möglich, einen schnellen Initialschaltvorgang und einen, wenn auch langsameren nachfolgenden vollständigen Schaltvorgang durchzuführen.

Es ist möglich, dass die Beeinflussungsvorrichtung auf das Steuerelement, auf das Betätigungselement oder sowohl auf das Steuerelement, als auch auf das Betätigungselement einwirkt. Eine derartige Krafteinkoppelung stellt üblicherweise die direkteste Krafteinkoppelung dar, so dass ein möglichst einfacher Aufbau gefördert werden kann. Auch können Hysterese-Effekte, die beispielsweise von Reibungseffekten im Rahmen einer mechanischen Kraftübertragung herrühren, vermindert werden.

Möglich ist es, die Koppelvorrichtung zumindest teilweise als Federvorrichtung, insbesondere als Metallfeder, Schraubenfeder, Spiralfeder und/oder Blattfeder auszubilden. Über derartige Federn ist die erwünschte elastische Ankoppelung auf einfache Weise realisierbar. Darüber hinaus werden derartige Federeinrichtungen bereits jetzt bei Thermostatventilaktuatoren verwendet, wenn auch in anderer Funktion. Von daher ist es möglich, auf bereits vorhandene Lagerbestände bzw. Zulieferbetriebe sowie auf bereits verwendete Fertigungstechniken zurückgreifen zu können. Dies vereinfacht eine schnelle und kostengünstige Realisierung des vorgeschlagenen Thermostatventilaktuators.

Weiterhin ist vorgesehen dass die Beeinflussungsvorrichtung wenigstens einen Elektromotor, insbesondere einen Schrittmotor aufweist. Derartige Motoren haben sich bereits in der Vergangenheit zur Beeinflussung der Regelungscharakteristik des Steuerelements bewährt. So kann auch in diesem Zusammenhang auf bewährte Komponenten zurückgegriffen werden. Darüber hinaus können auf besonders einfache Weise die Ausgangssignale einer elektronischen Steuervorrichtung in eine entsprechende Steuerbewegung umgewandelt werden. Da darüber hinaus der Elektromotor üblicherweise nur dann mit Energie versorgt werden muss, wenn die Stärke der Beeinflussung geändert wird, kann sich ein derartiger Aufbau darüber hinaus als sehr energiesparend erweisen.

Wenn die Beeinflussungsvorrichtung zumindest eine Getriebeeinrichtung aufweist, können darüber hinaus relativ kleine Kräfte, welche initial von der Beeinflussungsvorrichtung (wie beispielsweise einem Elektromotor) erzeugt werden, in relativ große Steuerkräfte umgesetzt werden. Auch kann eine derartige Getriebeeinrichtung durch die mechanische Untersetzung eine besonders feinfühlige Beeinflussung ermöglichen.

Es kann sich weiterhin als vorteilhaft erweisen, wenn ein veränderbarer Sollwert vorgegeben werden kann. Dieser Sollwert kann beispielsweise manuell von einem Benutzer eingestellt werden (und damit vorgegeben werden). Dabei kann es sich beispielsweise um eine Raumtemperatur oder um die Temperatur des von einem Wasserhahn ausgegebenen Wassers handeln. Denkbar ist es dabei beispielsweise, dass dieser an einem drehbaren Thermostataufsatz eine Raumtemperatur beziehungsweise eine Heißwassertemperatur vorgibt. Die Vorgabe kann dabei in beliebiger Weise, beispielsweise in Form von Temperaturangaben oder aber auch in Form einer Symbolik (z. B. Handwaschsymbol, Duschsymbol, Badewannensymbol usw. bei einer Warmwasserversorgung) erfolgen. Die Sollwertvorgabe kann entweder mechanisch (durch Veränderung eines Längenabstands im Thermostatventil oder einer Volumenvergrößerung/verkleinerung eines Balkelements) erfolgen, oder aber auch indirekt über eine elektronische Steuerung, die den eingegebenen Sollwert verrechnet und an einen entsprechenden Aktuator ausgibt.

Weiterhin ist es möglich, dass das Steuerelement zumindest einen Volumenexpansionskörper aufweist. In diesem kann beispielsweise ein Fluid aufgenommen sein, dessen Volumen sich mit der Temperatur ändert. Unter einem Fluid ist insbesondere ein gasförmiges Medium zu verstehen. Denkbar sind jedoch auch Flüssigkeiten, insbesondere Flüssigkeiten, die einen hohen thermischen Volumenexpansionskoeffizienten aufweisen. Auch an wachsartige Substanzen ist zu denken. Schließlich können auch Substanzen verwendet werden, die sich in einem überkritischen Zustand befinden, bei dem keine Unterscheidung zwischen flüssig und gasförmig mehr möglich ist. Selbstverständlich können auch Fluide verwendet werden, bei denen nur ein Teil flüssig bzw. gasförmig ist usw. Besonders bevorzugt wird Nassdampf als Füllung. Selbstverständlich können auch mehrere Hohlräume vorgesehen werden, die ggf. durch eine Fluidleitung miteinander verbunden sind, so dass die Temperaturmessung an einem vom Thermostatventilaktuator beabstandeten Ort erfolgen kann.

Weiterhin kann das Steuerelement zumindest ein Balgelement aufweisen. Derartige Balgelemente haben sich bereits bewährt, wenn ein flüssigkeitsdichter bzw. gasdichter Hohlraum zur Verfügung gestellt werden soll, dessen Volumen sich in nicht unerheblichem Maße ändert.

Möglich ist es auch, dass zumindest ein Kraftmesssensor vorgesehen wird. Dieser Kraftmesssensor kann beispielsweise im Zusammenhang mit der Beeinflussungsvorrichtung oder aber auch in Bezug auf die totale Kraft, die vom Thermostatventilaktuator auf das Außengehäuse ausgeübt wird, vorgesehen werden.

Möglich ist es, eine Steuerung, insbesondere eine elektronische Steuerung vorzusehen, welche zumindest einen vom Kraftmesssensor gemessenen Wert als Eingabewert verwendet. Der Ausgabewert des Kraftmesssensors kann dann beispielsweise als Rückkoppelungswert von der Steuerung verarbeitet werden. Basierend auf diesem Rückkoppelungswert kann anschließend beispielsweise die Beeinflussungsvorrichtung nachjustiert werden. Der Ausgabewert des Kraftmesssensors kann jedoch auch von anderweitigen Einrichtungen verwendet werden.

Weiterhin ist es möglich, dass die Steuerung derart eingerichtet ist, dass sie die Beeinflussungsvorrichtung derart beeinflusst, dass der Ausgabewert des Kraftmesssensors im Wesentlichen konstant gehalten wird. Wird der vom Kraftmesssensor gemessene Wert im Wesentlichen konstant gehalten, kann man die aus dem Ventil wirkenden Kräfte eliminieren. Auf diese Weise ist es beispielsweise möglich, die Temperatur des ausgegebenen Fluids (Warmwasser) im Wesentlichen konstant zu halten. Wenn die elektronische Steuerung so eingerichtet ist, dass sie die auf den Kraftmesser einwirkende Kraft möglichst konstant hält (und dazu den Aktuator des Thermostatventilaktuators geeignet ansteuert), kann der Druck im Volumenexpansionskörper im Wesentlichen konstant gehalten werden.

Dadurch kann aber auch eine im Wesentlichen konstante Temperatur, beispielsweise des ausgegebenen Wassers bei einer Brauchwassererwärmung, realisiert werden.

Möglich ist es auch, eine Anzeigevorrichtung, insbesondere eine Digitalanzeigevorrichtung vorzusehen, welche insbesondere vom Kraftmesssensor beeinflusst wird. Dadurch kann der vom Kraftmesssensor erfasste Kraftwert in einen Temperaturwert umgerechnet werden, der als Temperaturwert auf der Anzeige dargestellt wird.

Selbstverständlich ist es möglich, die bereits genannten und noch folgenden vorteilhaften Weiterbildungen des vorgeschlagenen Thermostatventilaktuators in beliebiger Weise miteinander zu kombinieren. Insbesondere ist es möglich, dass der Thermostatventilaktuator eine Mehrzahl von Beeinflussvorrichtungen aufweist, die sämtliche beziehungsweise die zum Teil auf unterschiedliche Beeinflussungsmechanismen zurückgreifen.

Die Erfindung wird im Folgenden mittels bevorzugter Ausführungsbeispiele derselben unter Zuhilfenahme der beigefügten Zeichnungen näher erläutert.

Es zeigen:

Fig. 1      die Anordnung eines Warmwasserthermostatventils für die Brauchwassererwärmung durch Fernwärme in schematischer Ansicht;

Fig. 2      einen Thermostatventilaktuator in schematischer Querschnittsansicht;

Fig. 3      Ergebnis eines Testlaufs zur Brauchwassererwärmung.

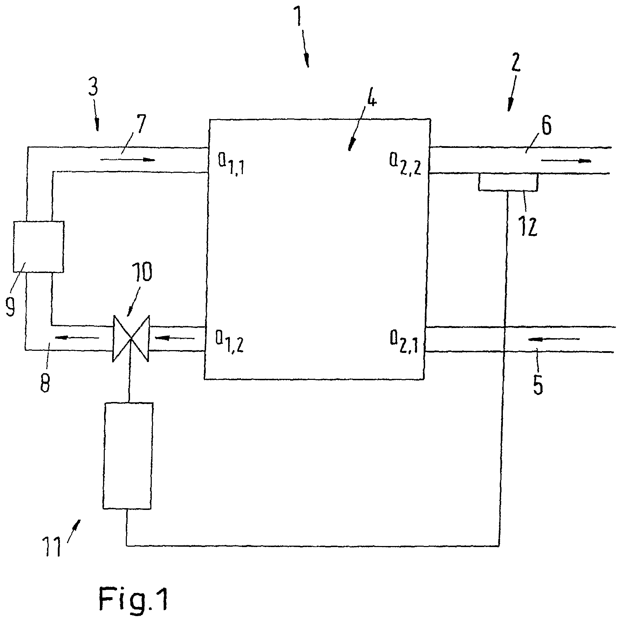

Fig. 1 zeigt eine Wärmetauscheranordnung 1 zur Erwärmung von Haushaltbrauchwasser 2 mit Hilfe von Fernwärme 3. Die jeweiligen Installationen 2, 3 sind nur schematisch angedeutet. Die Erwärmung des Haushaltsbrauchwassers 2 erfolgt mit Hilfe der Fernwärme 3, wobei ein Wärmetauscher 4 Anwendung findet. Auch der Wärmetauscher 4 ist nur schematisch dargestellt. Der Wärmetauscher 4 verfügt über insgesamt vier Fluidanschlüsse $Q_{1,1}$, $Q_{1,2}$, $Q_{2,1}$, $Q_{2,2}$.

Zwei Anschlüsse $Q_{2,1}$, $Q_{2,2}$ befinden sich auf der Haushaltsbrauchwasserseite 2. Hier ist ein Brauchwasserzulauf 5 zur Zuführung des noch kalten, zu erhitzenden Brauchwassers vorgesehen. Weiterhin ist ein Brauchwasserablauf 6 für das im Wärmetauscher 4 erhitzte Brauchwasser vorhanden. Die Strömungsrichtung des Brauchwassers ist durch Pfeile angedeutet.

Auf der Seite der Fernwärme 3 sind ebenfalls zwei Anschlüsse $Q_{1,1}$, $Q_{1,2}$ vorgesehen, nämlich ein Fernwärmezulauf 7 sowie ein Fernwärmerücklauf 8. Auch hier ist die Strömungsrichtung des Fernwärmeübertragungsmediums durch Pfeile angedeutet. Das Fernwärmeübertragungsmedium wird beispielsweise in einem Blockheizkraftwerk 9, welches schematisch angedeutet ist, erhitzt. Bei dem Fernwärmeübertragungsfluid kann es sich beispielsweise um Wasser, um überhitztes Wasser, um Heißdampf, um Nassdampf und/oder um ein sonstiges Fluid handeln.

Die Anschlüsse sind mit $Q_{i,j}$ bezeichnet, wobei i für den Fluidkreislauf (i = 1 für die Fernwärmeseite 3, i = 2 für die Brauchwasserseite 2) und j für die Strömungsrichtung (j = 1 für die Zulaufseite, j = 2 für die Ablaufseite) bezeichnet.

Weiterhin ist bei der Wärmetauschanordnung 1 in Fig. 1 ein Ventil 10 eingezeichnet, das von einem Ventilaktuator 11 gesteuert wird. Der wesentliche Eingabeparamter des Ventilaktuators 11 wird über einen Temperatursensor 12 bezogen, der die Temperatur $T_{2,2}$ des den Wärmetauscher 4 verlassenden Brauchwassers 6 (bei $Q_{2,2}$) misst. Bei dem Temperatursensor 12 handelt es sich im vorliegenden Beispiel um einen fluidgefüllten Temperatursensor, der mittels einer Nassdampfänderung des in ihm enthaltenen Fluids ein Stellsignal zur Verfügung stellt. Bei dem Fluid handelt es sich vorzugsweise um ein Gemisch aus einer Flüssigkeit und einem Gas. Insbesondere sollte es in dem Temperatursensor Nassdampf geben. Es ist deshalb wichtig, dass die Füllung in dem ganzen Bereich Nassdampf aufweist, in dem eine Temperaturgebung gewünscht ist.

Im Ausführungsbeispiel von Fig. 1 ist das Thermostatventil 10 ablaufseitig ($Q_{1,2}$) im Fernwärmekreislauf 3 vorgesehen. Selbstverständlich ist es ebenso denkbar, dass das Thermostatventil 10 zulaufseitig ($Q_{1,1}$) im Fernwärmekreislauf 3 angeordnet ist.

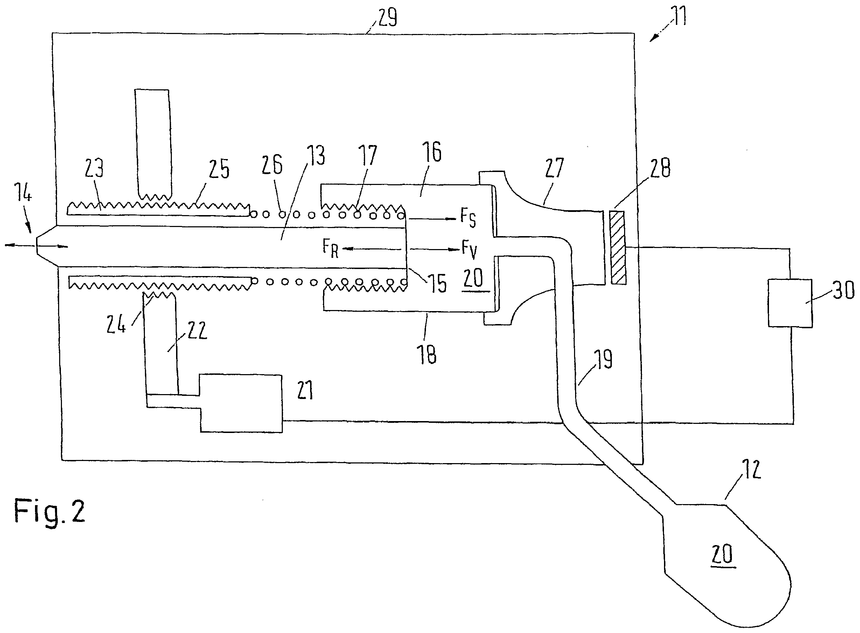

In Fig. 2 ist der Ventilaktuator 11 aus Fig. 1 in schematischer Querschnittsansicht näher dargestellt.

Der Ventilaktuator 11 weist einen Betätigungsstift 13 auf, der an einem stirnseitigen Kontaktbereich 14 (in Fig. 1 links dargestellt) den Ventilstift eines Thermostatventils (jeweils nicht dargestellt) kontaktiert. Eine Verschiebebewegung des Betätigungsstifts 13 (in Fig. 2 durch einen Doppelpfeil angedeutet) wird dementsprechend auf den Ventilstift des Ventils 10 übertragen und dementsprechend wird der Fluiddurchlass des Ventils 10 mehr oder weniger stark geöffnet. Das Heizungsventil übt dabei auf den Betätigungsstift 13 eine Gegenkraft $F_V$ (v für valve) aus. Diese Gegenkraft wird üblicherweise durch eine Ventilfeder erzeugt.

Das andere Ende des Betätigungsstifts 13 berührt einen beweglichen Bodenteil 15 einer fluidgefüllten Dose 16 mit variablen Innenvolumen. Diese Veränderlichkeit des Innenvolumens wird durch ein Balgelement 17 erzielt, welches zwischen dem beweglichen Bodenteil 15 und dem Dosengehäuse 18 angeordnet ist. Der Innenraum der Dose 16 ist mit einem Fluid gefüllt, das einen entsprechenden Druck aufweist, und somit eine entsprechende Kraft $F_R$ (R für regulation) auf den beweglichen Bodenteil 15 und damit über den Betätigungsstift 13 auf den Ventilstift des Ventils 10 ausübt. $F_R$ ist dabei eine Funktion der Temperatur. Die Kraft $F_R$ (T) ist das Produkt aus Dampfdruck im Hohlraum 20 und der Oberfläche des Bodenteils 15. Für den Dampfdruck (dampfförmiger Anteil des Fluids) $P_{Dampf}$ gilt dabei

$$P_{Dampf} = e^{\alpha + \frac{\beta}{T}},$$ wobei $\alpha$ und $\beta$ Materialkonstanten sind.

Der Innenraum der Dose 16 steht mit dem Innenraum des Temperatursensors 12 über eine Verbindungsleitung 19 fluidisch in Verbindung. Der Innenraum der Dose 16, der Innenraum der Verbindungsleitung 19 sowie der Innenraum des Temperatursensors 12 bilden einen gemeinsamen Hohlraum 20. Der Hohlraum 20 ist mit einem Fluid gefüllt. Durch eine Temperaturänderung des ablaufenden Brauchwassers 6 (beispielsweise weil ein Heißwasserhahn geöffnet wurde) verändert sich die Temperatur des im Temperatursensor 12 befindlichen Fluids analog. Aufgrund der Temperaturänderung des Fluids verändert dieses sein Volumen. Diese Volumenänderung des Fluids wird durch eine Volumenänderung des Hohlraums 20 ausgeglichen. Da, abgesehen vom Balgelement 17, die den Hohlraum 20 bildenden Teile im Wesentlichen starr ausgebildet sind, erfolgt diese Volumenänderung durch eine Bewegung des Bodenteils 15, wobei diese Bewegung über eine Schraubenfeder 26 und den Betätigungsstift 13 auf den Ventilstift des Ventils 10 übertragen wird.

Weiterhin ist bei dem Ventilaktuator 11 eine Spindel 23 vorgesehen, die mit einem Außengewinde 25 versehen ist. Die Spindel 23 steht an einer Seite mit der Schraubenfeder 26 in Verbindung. Die Schraubenfeder 26 wiederum kontaktiert mit ihrem anderen Ende das Bodenteil 15 der Dose 16. Wenn die Feder 26 unter Belastung steht, übt diese dementsprechend eine Kraft $F_S$ (S für spring) auf das Bodenteil 15 der Dose 16 aus. Die Kraft der Feder $F_S$ setzt sich dabei aus einem Wert einer Federvorspannung $F_{SO}$ und der Kraft, die durch Stauchung oder Dehnung der Feder aus der Nulllage heraus entsteht, zusammen. Es gilt $F_S = F_{SO} + S * \Delta X$, wobei S die Federkonstante und $\Delta X$ die Längenabweichung der Feder von der Vorspannungslage $S_o$ darstellt. Im Gegensatz zu bekannten Ventilaktuatoren kann beim vorliegenden Ventilaktuator 11 die Vorspannungskraft $F_{SO}$ über einen Elektromotor 21 verstellt werden (siehe nachfolgende Beschreibung).

Das Außengewinde 25 der Spindel 23 steht mit dem Innengewinde 24 eines Zahnrads 22 im Eingriff. Durch eine Drehung des Zahnrads 22 kann so die Spindel 23 nach links und rechts verschoben werden. Durch die Verschiebung kann die Vorspannung der Feder 26, und damit die Kraft $F_{SO}$ bzw. $F_S$, welche auf das Bodenteil 15 der Dose 16 einwirkt, verändert werden. Die Drehung des Zahnrads 22 wird im vorliegenden Fall durch den Elektromotor 21 bewirkt. Selbstverständlich ist es auch denkbar, dass die Bewegung des Elektromotors 21 mit Hilfe einer komplexeren Getriebeanordnung noch weiter heruntergesetzt wird. Auch können anderweitige Stellelemente verwendet werden. Der Elektromotor 21 wird von einer elektronischen Steuerung 30 entsprechend angesteuert.

In einem normalen Betriebszustand des Ventilaktuators 11 stehen drei Kräfte $F_R$, $F_S$ und $F_V$ im Gleichgewicht. Es gilt $F_S + F_V = F_R$. Dies gilt selbstverständlich nicht, wenn sich das Bodenteil 15 der Dose 16 aktuell bewegt. Aufgrund dieses Gleichgewichts ist es leicht ersichtlich, dass durch eine entsprechende Federvorspannung $F_S$ der Feder 26 die Kraft $F_V$ auf das Ventil 10 entsprechend verändert werden kann. Auf diese Weise ist es beispielsweise möglich, durch eine entsprechende Wahl der Federvorspannung $F_S$ der Spiralfeder 26 den Ventilaktuator 11 auf unterschiedliche Ventilkräfte $F_V$ von unterschiedlichen Bauformen von Ventilen 10 anzupassen. Die unterschiedliche Federvorspannung der Spiralfeder 26 wird dabei durch eine Ansteuerung des Elektromotors 21 bewirkt. Dadurch kann der Ventilaktuator 11 nahezu unabhängig von der Ventilkraft des jeweiligen Ventils 10 eingesetzt werden. Dies ist bei üblichen Ventilaktuatoren nicht der Fall.

Darüber hinaus kann man mit Hilfe des Elektromotors 21 den so genannten Z-Punkt einstellen. Ohne Elektromotor 21 würde sich eine im Allgemeinen lineare Abhängigkeit zwischen der Temperatur und dem Durchfluss ergeben. Wenn die Temperatur fällt, wird dies vom Temperatursensor 12 erfasst, das Ventil öffnet und der Durchfluss steigt. Der Elektromotor 21 ist mit dem Drucksensor 28 über die Steuerung 30 gekoppelt und stellt sicher, dass die Kräfte im Ventil ausgeglichen sind. Dementsprechend wird bildlich gesprochen die Linie, die die Abhängigkeit zwischen Temperatur und Durchfluss darstellt, parallel nach oben oder unten verschoben. Mit anderen Worten wird die Temperatur konstant gehalten. Dies verändert den Z-Punkt (Zero Point) für das Gleichgewicht der Kräfte in dem Ventil und es wird ein neuer Nullpunkt erzeugt.

Die Dose 16 ist schwimmend in einer Halterung 27 befestigt. Die Halterung 27 wiederum ist über einen Kraftmesssensor 28 mit dem Außengehäuse 29 des Ventilaktuators 11 verbunden. Der Kraftmesssensor 28 kann daher die Kraft $F_R$ bzw. die Kraft $F_S + F_V$ messen. Diese Kraft korreliert mit der aktuellen Brauchwassertemperatur (so wie sie vom Temperatursensor 12 gemessen wird. Sie dient als Haupteingabewert für die elektronische Steuerung 30. Der Ausgabewert des Kraftmesssensors 28 kann beispielsweise über die elektronische Steuerung 30 an eine vorliegend nicht dargestellte Digitalanzeige ausgegeben werden, die durch eine entsprechende Kalibration die aktuelle Brauchwassertemperatur anzeigt. Weiterhin kann der Ausgabewert von der elektronischen Steuerung 30 verwendet werden, um die Ansteuerung des Elektromotors 21 zu beeinflussen.

Somit kann eine kostengünstige Digitalanzeige realisiert werden bzw. kann die Regelungscharakteristik des Thermostatventilaktuators verbessert werden.

Unabhängig von der gewählten Detailausführung weist der vorgeschlagene Aufbau insbesondere folgende Vorteile auf: Zunächst einmal kann eine besonders schnelle Steuerungsantwort bei einer Systemänderung erzielt werden. Weiterhin ist der vorgeschlagene Thermostatventilaktuator 11 weitgehend unabhängig von der Gegenkraft, die von einem Ventil 10 ausgeübt wird. Darüber hinaus kann die Regelungscharakteristik des Thermostatventilaktuators 11 besonders stabil ausgeführt werden. Dies gilt insbesondere auch für kleine Volumen-Ströme, die üblicherweise ein großes Problem darstellen.

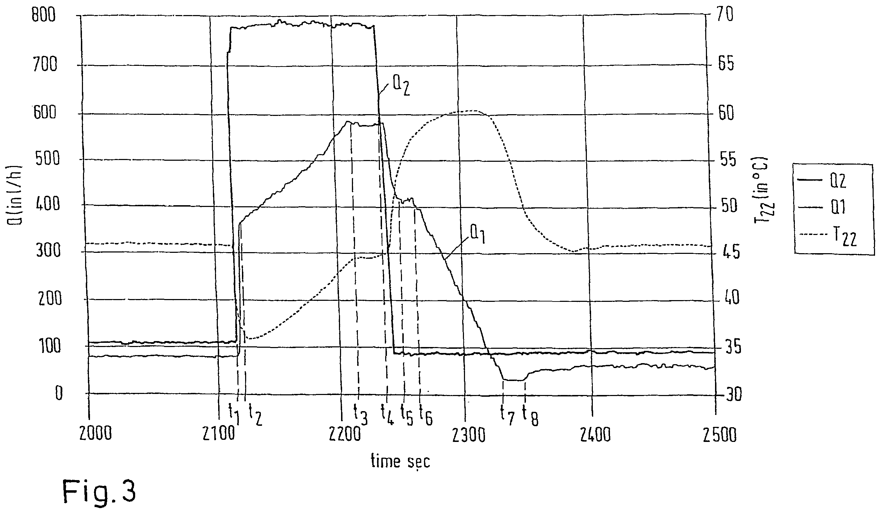

In Fig. 3 sind Versuchsergebnisse unter Verwendung eines Thermostatventilaktuators mit einem Aufbau gemäß Fig. 2 dargestellt. Der Versuchsaufbau entspricht dabei der in Fig. 1 skizzierten Anordnung.

Auf der Abszisse ist die Zeit in Sekunden dargestellt, wobei der absolute Wert der Zeitangabe im Wesentlichen bedeutungslos ist. Auf der Ordinate ist der Strömungsdurchsatz durch den Fernwärmekreislauf 3 ($Q_1$) sowie der Strömungsdurchsatz durch den Brauchwasserkreislauf 2 ($Q_2$) in Litern pro Stunde dargestellt. Weiterhin ist die am Punkt $Q_{2,2}$ gemessene Temperatur $T_{2,2}$ des Brauchwassers eingezeichnet.

Zunächst befindet sich das System in einem Ruhezustand. Sowohl im Fernwärmekreislauf 3 als auch im Brauchwasserkreislauf 2 liegt ein geringer Durchfluss durch den jeweiligen Kreislauf vor. Denkbar wäre es selbstverständlich auch, dass durch die entsprechenden Kreisläufe kein Durchfluss stattfindet. Die Temperatur $T_{2,2}$ am Brauchwasserabfluss beträgt etwa 46°C.

Zum Zeitpunkt $t_1$ (ungefähr bei 2.110 Sekunden) wird ein Wasserhahn im Brauchwasserkreislauf 2 geöffnet. Dementsprechend steigt die Kurve $Q_2$ zu diesem Zeitpunkt stark an. Dadurch sinkt die Wassertemperatur $T_{2,2}$ am Brauchwasserabfluss 6 entsprechend ab. Wie an der Kurve $Q_1$ gut zu erkennen ist, wird mittels des Ventilaktuators 11 das Thermostatventil 10 in sehr kurzer Zeit geöffnet, so dass auch der Durchfluss $Q_1$ im Fernwärmekreislauf 3 rasch ansteigt. Dadurch kann das Brauchwasser stärker erwärmt werden. Der anfängliche starke Anstieg zwischen den Zeitpunkten $t_1$ und $t_2$ beruht auf einer Volumenänderung des im Hohlraum 20 befindlichen Fluids und einer dementsprechenden Verschiebung des Bodenteils 15 der Dose 20 unter gleichzeitiger Verformung des Balgelements 17. Die Temperatur $T_{2,2}$ des Brauchwassers steigt dementsprechend wieder an.

Zum Zeitpunkt $t_2$ ändert sich das Volumen des im Hohlraum 20 befindlichen Fluids nicht mehr. Jedoch misst der Kraftmesssensor 28 eine geringere Kraft $F_R$ bzw. $F_S + F_V$ aufgrund des niedrigeren Drucks in der Dose 16 ($F_V$ und $F_S$ sind kleiner). Dementsprechend steuert eine elektronische Steuerung den Elektromotor 21 derart an, dass die Spindel 23 in Richtung auf die Dose 16 zu bewegt wird (in Fig. 2 nach rechts). Dadurch wird die Vorspannung der Spiralfeder 26 erhöht, so dass sich dementsprechend auch $F_S$ vergrößert. Aufgrund des Kräftegleichgewichts verringert sich dementsprechend die über den Betätigungsstift 13 auf das Ventil 10 ausgeübte Kraft, so dass sich dieses weiter öffnet. Diese Öffnungsbewegung erfolgt relativ langsam, was aus der geringeren Steigung der Kurve $Q_1$ bzw. der Kurve $T_{2,2}$ in diesem Bereich erkennbar ist. Zum Zeitpunkt $t_3$ stoppt der Elektromotor 21, da die Temperatur $T_{2,2}$ des Brauchwassers (annährend) der gewünschten Temperatur entspricht. Dementsprechend ist das System beginnend mit dem Zeitpunkt $t_3$ im Gleichgewicht. Hervorgehoben werden sollte in diesem Zusammenhang, dass die Temperatur des Brauchwassers (wenn der gewünschte Temperaturvorgabewert beibehalten wird) im Wesentlichen konstant ist. Auch dies ist ein großer Vorteil der vorliegenden Erfindung.

Zum Zeitpunkt $t_4$ wird der Wasserhahn im Brauchwasserkreislauf 2 wieder geschlossen. Dementsprechend bricht die Durchflussmenge $Q_2$ und der Wärmebedarf zusammen. Über die Volumenänderung des im Hohlraum 20 aufgenommenen Fluids kommt es erneut zu einer sehr schnellen Regelungsantwort, bei der das Thermostatventil 10 geschlossen wird. Zum Zeitpunkt $t_5$ ist die Volumenkontraktion des im Hohlraum 20 aufgenommenen Fluids beendet. Danach anschließend wird über die Kraftmessung durch den Kraftmesssensor 28 erneut der Elektromotor 21 angesteuert. Nun ist jedoch die Drehrichtung des Elektromotors 21 umgekehrt, so dass sich die Spindel 23 in eine Richtung bewegt, bei der der Abstand zwischen Spindel 23 und Dose 16 größer wird und dementsprechend die Federvorspannung $F_S$ der Feder 26 geringer wird. Beginnend mit dem Zeitpunkt $t_7$ befindet sich das System erneut im Gleichgewicht.

Das Plateau der Durchflusskurve $Q_1$ zwischen den Zeitpunkten $t_5$ und $t_6$ ist auf mechanische Hysterese-Effekte zurückzuführen. Mit einem reibungsärmeren Aufbau der Anordnung können diese verkleinert, gegebenenfalls auch gänzlich minimiert werden. Auch das "Hinausschießen" der Kurve $Q_1$ im Zeitintervall zwischen $t_7$ und $t_8$ kann durch eine Anpassung der Steuerung reduziert oder verhindert werden. Der Einfluss auf die Güte der Kurve $T_{2,2}$ ist jedoch, wie man Fig. 3 entnehmen kann, nur gering.

Fig. 3 lässt sich gut der große Vorteil gegenüber bisherigen Systemen entnehmen:

Einerseits wird eine sehr schnelle initiale Regelantwort in den Zeitintervallen $t_1$ bis $t_2$ sowie $t_4$ bis $t_5$ zur Verfügung gestellt. Die Regelanwort ist insbesondere schneller als bei Systemen, welche lediglich über einen mit Hilfe eines Elektromotors verstellbaren Ventilaktuator verfügen. Ein derartiger Ventilaktuator, der lediglich einen Elektromotor aufweist, würde während der gesamten Regelungsstrecke eine Antwortgeschwindigkeit aufweisen, die der Antwortgeschwindigkeit im Intervall $t_2$ bis $t_3$ bzw. $t_6$ bis $t_7$ entspricht.

Gegenüber Systemen, die lediglich eine fluidbasierte Regelung aufweisen, kann eine verbesserte und vollständigere Regelungsantwort erzielt werden. So ist zwar die Regelungsgeschwindigkeit im Intervall $t_2$ bis $t_3$ langsamer als im Intervall zwischen $t_1$ und $t_2$, jedoch kommt es überhaupt zu einer Regelungsantwort. Entsprechendes gilt für das Intervall $t_5$ bis $t_7$.

**Patentansprüche**

1. Thermostatventilaktuator (11) für eine Anlage, insbesondere Thermostatventilaktuator (11) für Warmwasserheizungsanlagen (10), speziell Thermostatventilaktuator für Brauchwassererwärmungsvorrichtungen, aufweisend ein Steuerelement (15, 16), welches sich temperaturabhängig verändert, ein Betätigungselement (13), welches die Veränderung des Steuerelements (12, 16) zur Regelung der Anlage (10) nutzt, sowie wenigstens eine Beeinflussungsvorrichtung (23), welche die Regelungscharakteristik des Steuerelements (15, 16) beeinflusst, wobei die Beeinflussungsvorrichtung (23) wenigstens einen Elektromotor (21) aufweist und die Regelungscharakteristik des Steuerelements (15, 16) mittels einer Vorspannung einer elastischen Koppelvorrichtung (26) beeinflusst und das Steuerelement (15, 16) einen Bodenventilkolben (15) in Kontakt zu der Inneren einer fluidgefüllten Dose mit variablem Innenvolumen (16) hat, **dadurch gekennzeichnet,**

**dass** die Beeinflussungsvorrichtung (23) an einer Seite mit der elastischen Koppelvorrichtung (26) in Verbindung steht und die Koppelvorrichtung (26) wiederum mit ihrem anderen Ende das Bodenventilkolben (15) kontaktiert.

2. Thermostatventilaktuator nach Anspruch 1, **dadurch gekennzeichnet, dass** die Beeinflussungsvorrichtung (23) auf das Steuerelement (15, 16) und/oder auf das Betätigungselement (13) einwirkt.

3. Thermostatventilaktuator nach Anspruch 1 oder 2, **dadurch gekennzeichnet, dass** die Koppelvorrichtung (26) zumindest teilweise als Federeinrichtung, insbesondere als Metallfeder, Schraubenfeder, Spiralfeder und/oder Blattfeder, ausgebildet ist.

4. Thermostatventilaktuator nach einem der Ansprüche 1 bis 3, **dadurch gekennzeichnet, dass** die Beeinflussungsvorrichtung (23) zumindest eine Getriebeeinrichtung aufweist.

5. Thermostatventilaktuator nach einem der Ansprüche 1 bis 4, **dadurch gekennzeichnet, dass** ein veränderbarer Sollwert vorgegeben werden kann.

6. Thermostatventilaktuator nach einem der Ansprüche 1 bis 5, **dadurch gekennzeichnet, dass** das Steuerelement (15, 16) zumindest einen Volumenexpansionskörper (12, 16, 20) aufweist in dem der Innenraum der Dose (16) mit dem Innenraum eines Temperatur-sensors (12) über eine Verbindungsleitung (19) fluidisch in Verbindung steht, so dass der Innenraum der Dose (16) der Innenraum der Verbindungsleitung (19) sowie der Innenraum des Temperatursensors (12) einen gemeinsamen Hohlraum (20) bilden.

7. Thermostatventilaktuator nach Anspruch 6, **dadurch gekennzeichnet, dass** der Volumenexpansionskörper (20) Nassdampf aufweist.

8. Thermostatventilaktuator nach einem der Ansprüche 1 bis 7, **dadurch gekennzeichnet, dass** das Steuerelement zumindest ein Balgelement (17) aufweist.

9. Thermostatventilaktuator nach einem der Ansprüche 1 bis 8, **gekennzeichnet durch** zumindest einen Kraftmesssensor (28).

10. Thermostatventilaktuator nach Anspruch 9, **gekennzeichnet durch** eine Steuerung, insbesondere eine elektronische Steuerung, welche zumindest den vom Kraftmesssensor (28) gemessenen Wert als Eingabewert verwendet.

11. Thermostatventilaktuator nach Anspruch 10, **da-**

**durch gekennzeichnet, dass** die Steuerung derart eingerichtet ist, dass sie die Beeinflussungsvorrichtung (23) derart beeinflusst, dass der Ausgabewert des Kraftmesssensors (28) im Wesentlichen konstant gehalten wird.

12. Thermostatventilaktuator nach einem der Ansprüche 1 bis 11, insbesondere nach einem der Ansprüche 10 bis 12, **gekennzeichnet durch** eine Anzeigevorrichtung, insbesondere eine Digitalanzeigevorrichtung, welche insbesondere vom Kraftmesssensor (28) beeinflusst wird.

**Claims**

1. Thermostatic valve actuator (11) for a system, in particular a thermostatic valve actuator (11) for hot-water heating systems (10), specifically a thermostatic valve actuator for service water heating devices, having a control element (15, 16) which changes depending on temperature, an actuator element (13) which uses the change in the control element (12, 16) to regulate the system (10), and at least one influencing device (23) which influences the regulating characteristics of the control element (15, 16), the influencing device (23) having at least one electric motor (21) and influencing the regulating characteristics of the control element (15, 16) by means of preloading an elastic coupling device (26), and the control element (15, 16) having a bottom valve piston (15) in contact with the interior of a fluid-filled capsule with variable internal volume (16),
**characterized in that** the influencing device (23) is connected on one side to the elastic coupling device (26), and the coupling device (26) in turn makes contact with the bottom valve piston (15) by way of its other end.

2. Thermostatic valve actuator according to Claim 1, **characterized in that** the influencing device (23) acts on the control element (15, 16) and/or on the actuating element (13).

3. Thermostatic valve actuator according to Claim 1 or 2,
**characterized in that** the coupling device (26) is at least partly formed as a spring unit, in particular as a metal spring, helical spring, spiral spring and/or leaf spring.

4. Thermostatic valve actuator according to one of Claims 1 to 3,
**characterized in that** the influencing device (23) has at least one gear unit.

5. Thermostatic valve actuator according to one of Claims 1 to 4,
**characterized in that** a variable setpoint can be predefined.

6. Thermostatic valve actuator according to one of Claims 1 to 5,
**characterized in that** the control element (15, 16) has at least one volume expansion body (12, 16, 20) in which the interior of the capsule (16) is connected fluidically to the interior of a temperature sensor (12) via a connecting line (19), so that the interior of the capsule (16), the interior of the connecting line (19) and the interior of the temperature sensor (12) form a common hollow space (20).

7. Thermostatic valve actuator according to Claim 6, **characterized in that** the volume expansion body (20) has wet steam.

8. Thermostatic valve actuator according to one of Claims 1 to 7,
**characterized in that** the control element has at least one bellows element (17).

9. Thermostatic valve actuator according to one of Claims 1 to 8,
**characterized by** at least one force-measuring sensor (28).

10. Thermostatic valve actuator according to Claim 9, **characterized by** a controller, in particular an electronic controller, which uses at least the value measured by the force-measuring sensor (28) as input value.

11. Thermostatic valve actuator according to Claim 10, **characterized in that** the controller is set up in such a way that it influences the influencing device (23) in such a way that the output value from the force-measuring sensor (28) is kept substantially constant.

12. Thermostatic valve actuator according to one of Claims 1 to 11, in particular according to one of Claims 10 to 12,
**characterized by** a display device, in particular a digital display device, which is influenced in particular by the force-measuring sensor (28).

**Revendications**

1. Actionneur de vanne thermostatique (11) pour une installation, en particulier actionneur de vanne thermostatique (11) pour des installations de chauffage d'eau chaude (10), spécialement actionneur de vanne thermostatique pour des dispositifs de chauffage d'eau sanitaire, présentant un élément de commande (15, 16), qui change en fonction de la température, un élément d'actionnement (13), qui utilise le changement de l'élément de commande (12, 16) pour la régulation de l'installation (10), ainsi qu'au moins un dispositif d'influence (23), qui influence la caractéristique de régulation de l'élément de commande (15, 16), dans lequel le dispositif d'influence (23) présente au moins un moteur électrique (21) et influence la caractéristique de régulation de l'élément de commande (15, 16) au moyen d'une précontrainte d'un dispositif de couplage élastique (26) et l'élément de commande (15, 16) comporte un piston de soupape de fond (15) en contact vers l'intérieur d'une boîte à volume intérieur variable (16) remplie de fluide, **caractérisé en ce que** le dispositif d'influence (23) est en liaison sur un côté avec le dispositif de couplage élastique (26) et le dispositif de couplage (26) est de nouveau en contact par son autre extrémité avec le piston de soupape de fond (15).

2. Actionneur de vanne thermostatique selon la revendication 1, **caractérisé en ce que** le dispositif d'influence (23) agit sur l'élément de commande (15, 16) et/ou sur l'élément d'actionnement (13).

3. Actionneur de vanne thermostatique selon la revendication 1 ou 2, **caractérisé en ce que** le dispositif de couplage (26) est réalisé au moins en partie sous la forme d'un dispositif à ressort, en particulier d'un ressort métallique, d'un ressort hélicoïdal, d'un ressort spiral et/ou d'un ressort à lame.

4. Actionneur de vanne thermostatique selon l'une quelconque des revendications 1 à 3, **caractérisé en ce que** le dispositif d'influence (23) présente au moins un dispositif à engrenage.

5. Actionneur de vanne thermostatique selon l'une quelconque des revendications 1 à 4, **caractérisé en ce qu'**une valeur de consigne variable peut être prédéterminée.

6. Actionneur de vanne thermostatique selon l'une quelconque des revendications 1 à 5, **caractérisé en ce que** l'élément de commande (15, 16) présente au moins un corps d'expansion de volume (12, 16, 20) dans lequel l'espace intérieur de la boîte (16) est en communication fluidique par une conduite de raccordement (19) avec l'espace intérieur d'un capteur de température (12), de telle manière que l'espace intérieur de la boîte (16), l'espace intérieur de la conduite de raccordement (19) ainsi que l'espace intérieur du capteur de température (12) forment une cavité commune (20).

7. Actionneur de vanne thermostatique selon la revendication 6, **caractérisé en ce que** le corps d'expansion de volume (20) présente de la vapeur humide.

8. Actionneur de vanne thermostatique selon l'une quelconque des revendications 1 à 7, **caractérisé en ce que** l'élément de commande présente au moins un élément de soufflet (17).

9. Actionneur de vanne thermostatique selon l'une quelconque des revendications 1 à 8, **caractérisé par** au moins un capteur dynamométrique (28).

10. Actionneur de vanne thermostatique selon la revendication 9, **caractérisé par** une commande, en particulier une commande électronique, qui utilise au moins la valeur mesurée par le capteur dynamométrique (28) comme valeur d'entrée.

11. Actionneur de vanne thermostatique selon la revendication 10, **caractérisé en ce que** la commande est configurée de telle manière qu'elle influence le dispositif d'influence (23), de telle manière que la valeur de sortie du capteur dynamométrique (28) soit maintenue essentiellement constante.

12. Actionneur de vanne thermostatique selon l'une quelconque des revendications 1 à 11, en particulier selon une des revendications 10 à 12, **caractérisé par** un dispositif d'affichage, en particulier un dispositif d'affichage numérique, qui est influencé en particulier par le capteur dynamométrique (28).

Fig.1

Fig. 2

EP 2 217 985 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1033638 A1
- DE 3153654 C2
- DE 3821813 C1
- DE 102006006999 B3
- EP 0923013 A1
- US 20040182944 A1